(19) Europäisches Patentamt
European Patent Office
Office européen des brevets

(11) Veröffentlichungsnummer: **0 258 554**
**A1**

# (12) EUROPÄISCHE PATENTANMELDUNG

(21) Anmeldenummer: **87108958.7**

(22) Anmeldetag: **23.06.87**

(51) Int. Cl.4: **C08J 3/20**, C08K 3/36, C08L 21/00

(30) Priorität: **19.08.86 DE 3628120**

(43) Veröffentlichungstag der Anmeldung:
**09.03.88 Patentblatt 88/10**

(84) Benannte Vertragsstaaten:
**BE DE ES FR GB IT NL**

(71) Anmelder: **HÜLS AKTIENGESELLSCHAFT**
**Patentabteilung / PB 15 - Postfach 13 20**
**D-4370 Marl 1(DE)**

(72) Erfinder: **Ollenik, Reiner, Dr.**
**Griesheimer Strasse 18**
**D-4370 Marl(DE)**
Erfinder: **Kleinert, Walter, Dr.**
**Geeste 81**
**D-4282 Velen(DE)**
Erfinder: **Müller, Michael F., Dr.**
**Mecklenbecker Strasse 177**
**D-4400 Münster(DE)**

## (54) Verfahren zur Herstellung von rieselfähigen, mit Kieselsäure gefüllten Kautschukpulvern.

(57) Verfahren zur Herstellung von rieselfähigen mit Kieselsäure gefüllten Kautschukpulvern durch Vereinigung eines Kautschuklatex mit Kieselsäure unter Rühren in Gegenwart von Hilfsstoffen, Einstellung eines bestimmten pH-Bereiches, Abtrennung und Trocknung des Feststoffanteils, wobei man als Hilfsstoffe organische grenzflächenaktive Substanzen zusammen mit kolloidaler Kieselsäure einsetzt.

EP 0 258 554 A1

Xerox Copy Centre

# Verfahren zur Herstellung von rieselfähigen, mit Kieselsäure gefüllten Kautschukpulvern

Die Vorzüge von rieselfähigen, füllstoffhaltigen Kautschukpulvern gegenüber der konventionellen Ballenmischung sind in der Literatur mehrfach beschrieben worden (z. B. DE-PS 28 22 148). Als Füllstoffe werden dabei in erster Linie die in der Kautschukindustrie gebräuchlichen Ruße sämtlicher Aktivitätsstufen eingesetzt. Daneben ist jedoch auch der Einsatz von hellen Füllstoffen, vorzugsweise von hochaktiver Kieselsäure ($SiO_2$) bekannt.

Bei den meisten Verfahren des Standes der Technik zur Herstellung von mit Kieselsäure gefüllten Kautschukpulvern geht man so vor, daß man Mischungen aus Kautschuklatex und Wasserglas in Gegenwart von großen Mengen neutraler Elektrolyte mit Säuren oder sauren Salzen behandelt, den Niederschlag abtrennt, salzfrei wäscht und trocknet. Der Hauptnachteil dieser als in-situ-Fällung bezeichneten Fahrweise ist der, daß dabei große Mengen von mit organischen Stoffen und mit Elektrolyten belasteten Abwässern anfallen. Ein weiterer Nachteil ist darin zu sehen, daß die Kautschukpulver sehr feinteilig anfallen (siehe DE-PS 20 30 172, Spalte 1, Zeilen 63 und 64) und damit bei der Verarbeitung zum unerwünschten Stauben neigen.

Die Nachteile der in-situ-Fällung konnten durch frühere Arbeiten überwunden werden, jedoch mit der Einschränkung, daß Füllgrade, welche für die Direktverarbeitung von mit Kieselsäure gefüllten Kautschukpulvern interessant sind, nicht realisiert werden konnten.

Mit dem Verfahren der deutschen Patentanmeldung P 36 06 742.3 (= DE-OS .. .. ...) ist es uns gelungen, mit Kieselsäure gefüllte Kautschukpulver herzustellen, die das vom Verarbeiter gewünschte Kautschuk-Kieselsäure-Verhältnis aufweisen und dabei gute pulvertechnologische Eigenschaften in Bezug auf Rieselfähigkeit, Staubfreiheit und Lagerstabilität aufweisen. Das Verfahren ist allerdings auf den Einsatz von Kieselsäuren mit charakteristischer Korngrößenverteilung beschränkt.

Aufgabe der vorliegenden Erfindung war es daher, ein Verfahren zu entwickeln, bei dem unter Beibehaltung der vorher beschriebenen pulvertechnologischen Eigenschaften keine charakteristische Korngrößenverteilung bei der als Füllstoff eingesetzten Kieselsäuren erforderlich ist. Dadurch wird es möglich, die Herstellung der Kieselsäure und des damit gefüllten Kautschukpulvers getrennt voneinander zu optimieren.

Diese Aufgabe wurde durch die in den Patentansprüchen beschriebenen Maßnahmen gelöst.

Für das erfindungsgemäße Verfahren geeignete Kautschuklatices sind einmal solche auf Basis von Naturkautschuk und abgebautem Naturkautschuk (GB-PS 749 955 und deutsche Patentanmeldung P 36 06 745.8 = DE-OS .. .. ...) und zum anderen solche aus Homo-und Mischpolymerisaten von konjugierten Dienen, wie sie durch radikalische Polymerisation unter Verwendung eines Emulgators nach bekannten Verfahren des Standes der Technik hergestellt werden können (siehe z. B. Houben-Weyl, Methoden der organischen Chemie, Band XIV/1 (1961), "Herstellung von Kautschuken", Seite 712 ff.; Ullmanns Enzyklopädie der technischen Chemie, 13. Band (1977), Seiten 595 bis 635, sowie DE-PSS 679 587, 873 747 und 1 130 597). Als konjugierte Diene kommen dabei Butadien-(1,3), Isopren, Piperylen, 2-Chlorbutadien-(1,3), 2-Methylbutadien-(1,3) und 2,3-Dichlorbutadien-(1,3) und 2,3-Dimethylbutadien-(1,3) infrage. Die Mischpolymerisate können sowohl aus Mischungen dieser konjugierten Diene als auch aus Mischungen dieser konjugierten Diene mit Vinylverbindungen, wie z. B. Styrol, alpha-Methylstyrol, Acrylnitril, Acrylsäure, Methacrylsäure und Vinylpyridin, hergestellt werden. Bevorzugt wird beim erfindungsgemäßen Verfahren ein Styrol-Butadien-Latex mit einem Styrolanteil von 15 bis 30 Gewichtsprozent eingesetzt. Der Feststoffgehalt der Latices beträgt im allgemeinen 20 bis 25 Gewichtsprozent.

Die Aktivität der als Füllstoff einsetzbaren Kieselsäuren wird üblicherweise über die Oberflächenbestimmung nach BET (J. Amer. Soc. <u>60</u> , 309 (1938) bestimmt und liegt im Bereich von 80 bis 250 m/g, vorzugsweise 130 bis 200 $m^2/g$. Die für die Messung herangezogenen Proben werden im pH-Bereich 6 bis 7 bei der Kieselsäurefällung entnommen.

Eine weitere für Kautschukfüllstoffe wesentliche Eigenschaft ist die Struktur. Sie wird üblicherweise über die DBP-Adsorption nach ASTM D 2414-79 bzw. über die Restfeuchte des Filterkuchens der Fällungskieselsäure bestimmt. Geeignete Kieselsäuren sind solche mit hoher Struktur, d. h. mit DBP-Zahlen von 220 bis 380 ml/100 g bzw. Filterkuchenfeuchte von 75 bis 86 %. Da bei dem vorliegenden Verfahren die Kieselsäure bevorzugt als weitgehend salzfrei (< 3 %) gewaschener Filterkuchen aus der Kieselsäurefällung eingesetzt wird, ist die Filterkuchenfeuchte als Strukturmaß gegenüber der DBP-Zahl vorzuziehen. Solche Kieselsäuren können z. B. nach den Verfahren der DE-PSS 1 467 019 bzw. 1 767 332 hergestellt werden.

Über die Korngrößenverteilung der einsetzbaren Kieselsäuren braucht keine Aussage gemacht zu werden, da sie sich zwangsläufig bei der Einstellung der Struktur ergibt (siehe z. B. DE-PS 17 67 332). Außerdem ist es gerade der Vorteil des erfindungsgemäßen Verfahrens, daß keine charakteristische Korngrößenverteilung eingehalten werden muß.

Die (Fällungs-)Kieselsäure wird im allgemeinen in einer Menge von 30 bis 120 phr (parts per hundred rubber), vorzugsweise 40 bis 60phr, eingesetzt.

Das wesentliche Merkmal des vorliegenden Verfahrens ist die Anwesenheit von bestimmten Hilfsstoffen bei der Vereinigung des Kautschuklatex mit der als Füllstoff eingesetzten Kieselsäure.

Als erste Gruppe von verfahrenskritischen Hilfsstoffen sind die grenzflächenaktiven Substanzen zu nennen. Es sind allesamt organische kationische und nicht-ionische Verbindungen. Dies sind bevorzugt Flokkungshilfsmittel (sogenannte flocculating agents). Nähere Angaben dazu findet man in der Monographie "The Chemistry of Silica" von Ralph Iler, John Wiley und Sons, New York, 1979, Seiten 384 bis 396.

Einsetzbare kationische grenzflächenaktive Substanzen sind einmal kationische Tenside, zum anderen kationische Polymere.

Als kationische Tenside kommen in erster Linie quartäre Alkyltrimethylammoniumhalogenide, vorzugsweise -chloride und -bromide mit einem $C_8$-bis $C_{20}$-, vorzugsweise $C_{12}$-$C_{20}$-Alkylrest, und Alkylarylammoniumhalogenide und Alkylpyridiniumhalogenide, wiederum vorzugsweise -chloride und -bromide, infrage. Typische Vertreter der einzelnen Verbindungsgruppen sind Cetyltrimethylammoniumbromid, Cetyldimethylbenzylammoniumchlorid und Tetradecylpyridiniumbromid.

Für das erfindungsgemäße Verfahren geeignete kationische Polymere sind bevorzugt hochmolekulare Polyamine, die quartäre Stickstoffatome enthalten (siehe auch Kirk-Othmer, Encyclopedia of Chemical Technology, 3rd Edition, Vol. 10, Seiten 489 bis 523 (1980). In erster Linie kommen hier Verbindungen zur Anwendung, die eine Grundstruktur der allgemeinen Formel

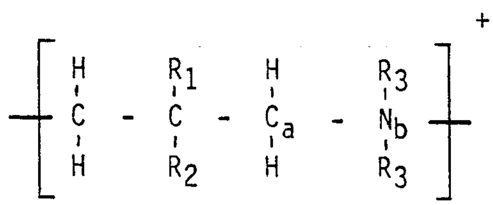

$[A]^-$ aufweisen,

in der bedeuten:

$R_1$ = H-mit a = 0, b = 0 oder 1;

$R_1$ = OH-mit a = b = 1;

$R_1$ = $C_1$-bis $C_3$-Alkylrest mit a = b = 0;

$R_2$ = H-mit a = 0 oder 1, b = 1;

$R_2$ = 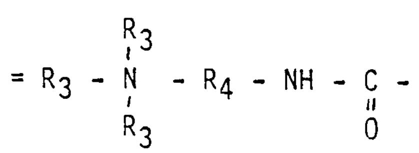 oder 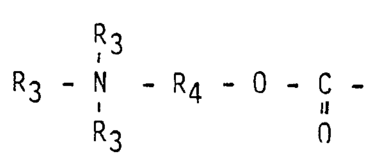

mit a = b = 0;

$R_3$ = H-, $C_1$-bis $C_6$-Alkylrest mit a = b = 0, a = b = 1, a = 0 und b = 1;

$R_4$ = $C_1$-bis $C_{12}$-Alkylrest mit a = b = 0.

Die Amine sind geradkettig, können aber auch über das Stickstoffatom verzweigt aufgebaut sein.

$A^-$ steht für Anionen wie Halogenid, vorzugsweise Chlorid oder Bromid, Sulfat, Hydrogensulfat, Phosphat, Acetat, Oxalat, Hydroxyl o. ä.

Das Molekulargewicht dieser Polyamine liegt im Bereich von $10^4$ bis $10^8$, vorzugsweise bei $10^4$ bis $8 \bullet 10^6$. Die angeführten Molekulargewichte sind als Gewichtsmittel ausgedrückt.

Bevorzugt sind hochmolekulare Polyamine mit $R_1$ = OH-, $R_2$ = H-, $R_3$ = H-oder $C_1$-bis $C_6$-Alkylrest mit a = b = 1.

Das Molekulargewicht dieser Polyamine liegt im allgemeinen im Bereich von $10^4$ bis $8 \bullet 10^5$, vorzugsweise von $10^4$ bis $2 \bullet 10^5$.

Ein typischer Vertreter dieser Gruppe ist ein Poly(hydroxyalkylamin), das unter dem Handelsnamen SUPERFLOC® C 567 der Fa. American Cyanamid vertrieben wird.

Aus der Vielzahl der organischen nicht-ionischen grenzflächenaktiven Substanzen sollen an dieser Stelle stellvertretend folgende Stoffgruppen genannt werden: Fettalkoholpolyglykolether, Alkylphenolpolyglykolether, Fettsäurepolyglykolester, Fettsäurealkylolamide, Fettsäureamidpolyglykolether, Additionsprodukte des Ethylen-und/oder Propylenoxids, Fettaminpolyglykolether und Cellulosederivate, wie Hydroxyalkylcellulose. Bevorzugt sind die Fettalkoholpolyglykolether. Ein typischer Vertreter dieser Gruppe ist die Verbindung Cetyl-$(CH_2\text{-}CH_2\text{-}O)_{20}$-H.

Die grenzflächenaktiven Substanzen werden im allgemeinen in einer Menge von 0,3 bis 10, vorzugsweise 0,5 bis 4 phr eingesetzt.

Neben der (den) grenzflächenaktiven Substanz(en) ist der Zusatz einer kolloidalen Kieselsäure verfahrenskritisch. Darunter werden im Rahmen dieser Erfindung nicht-oder anionisch stabilisierte Kieselsäuresole mit Partikelgrößen von 2 bis 100, vorzugsweise 4 bis 30 nm, verstanden. Einzelheiten zu den vielfältigen Methoden zur Herstellung kolloidaler Kieselsäuren sind der bereits zitierten Monographie von Ralph Iler, Seiten 331 bis 343, sowie der DE-PS 26 41 548 zu entnehmen.

Die kolloidale Kieselsäure wird im allgemeinen in einer Menge von 0,5 bis 6 phr, vorzugsweise 1 bis 3 phr, eingesetzt. Dabei ist es ein besonderer Vorteil des erfindungsgemäßen Verfahrens, daß auch Kieselsäuresole mit Konzentrationen unter 10 % $SiO_2$ eingesetzt werden können. Solche Sole werden üblicherweise aus verdünnter (< 10 % $SiO_2$) Wasserglaslösung hergestellt, indem man diese mit einem sauren Ionenaustauscher behandelt (Lehrbuch der anorganischen Chemie von Hollemann -Wiberg, 1985, Seite 763).

Im allgemeinen führt man das erfindungsgemäße Verfahren so durch, daß man Kautschuklatex zweckmäßigerweise bei Raumtemperatur (18 bis 25 °C) vorlegt, die grenzflächenaktive Substanz, die kolloidale Kieselsäure und den Füllstoff unter Rühren hinzufügt. Dabei ist lediglich zu beachten, daß die Mischung einen pH-Wert aufweist, der außerhalb des Koagulationsbereiches des Latex liegt. Wie bereits erwähnt, kommt die als Füllstoff einsetzbare Kieselsäure bevorzugt in der Form zum Einsatz, wie sie aus dem Waschprozeß bei der Kieselsäureherstellung aus Wasserglas anfällt, d. h. als niemals getrockneter Filterkuchen. Dabei kann man diesen aus Gründen der einfacheren Handhabung vor seinem Einsatz resuspendieren, wobei der Feststoffgehalt der Füllstoffsuspension vorzugsweise > 10 % sein sollte. Setzt man eine derartige Füllstoffsuspension ein, so kann auch diese anstelle des Kautschuklatex vorgelegt werden.

In dieser ersten Phase des Herstellungsprozesses können der Mischung auch weitere in der Kautschuktechnologie übliche Hilfsstoffe, wie z.B. UV-Stabilisatoren und Antioxidantien, zugegeben werden. Bei der Zugabe aller Stoffe ist darauf zu achten, daß eine homogene Durchmischung sichergestellt ist.

Die homogene Mischung wird sodann in der sich anschließenden Phase auf einen bestimmten pH-Bereich eingestellt, um den Kautschuklatex zu koagulieren (Koagulationsphase). Beim Einsatz von nichtionischen grenzflächenaktiven Substanzen ist ein End-pH-Wert im Bereich von 1 bis 5, vorzugsweise 1,5 bis 4, erforderlich. Kationische Tenside bzw. Polymere erfordern einen End-pH-Wert im Bereich von 2 bis 9. Der günstigste pH-Bereich kann durch wenige orientierende Versuche leicht ermittelt werden. Zur Einstellung des pH-Wertes werden üblicherweise Mineralsäuren oder mineralsaure Salze, vorzugsweise Schwefelsäure, verwendet. Bei Verwendung bestimmter kationischer grenzflächenaktiver Substanzen erübrigt sich u. U. die Säure-bzw. Salzzugabe zum Zwecke der Koagulation. Allerdings muß in solchen Fällen die kationische grenzflächenaktive Substanz als letzte Komponente in das System eingebracht werden.

Während der Koagulationsphase ist ein intensives Rühren notwendig. Geeignet sind alle Rührsysteme, die zum Dispergieren geeignet sind, wie z. B. Schrägblatt-, Propeller-, Impeller-und Scheibenrührer. Auch stark scherende Rührorgane, wie z. B. Scherturbinen, können eingesetzt werden. Die Umfangsgeschwindigkeiten der genannten Rührertypen sollte > 4 m/sec sein. Die Rührzeit liegt im allgemeinen im Bereich von wenigen Minuten (3 bis 15). Anschließend wird der Feststoffanteil vom Serum abgetrennt, gegebenenfalls mehrfach mit Wasser gewaschen, vom Waschwasser weitgehend befreit, zerteilt und unter Bewegung getrocknet.

Die nach dem erfindungsgemäßen Verfahren erhaltenen rieselfähigen Kautschukpulver werden in erster Linie zur Herstellung von Vulkanisaten im Bereich der technischen Artikel, wie z. B. Dichtungen, und in der Schuhsohlenfabrikation eingesetzt.

Alle Angaben sind - sofern nicht anders angegeben - Gewichtsprozente.

Das Verfahren wird anhand der nachfolgenden Beispiele näher erläutert.

Vorab sind die benutzten Substanzen und Prüfungsverfahren zusammengestellt:

A. Substanzen

A.1. Latices (L)

L 1: Alterungsstabilisierter Styrol-Butadien-Latex (Typ 1502 der Bunawerke Hüls GmbH) mit einem Styrolgehalt von 23,5% und einem Feststoffgehalt von ca. 22 %.

L 2: Gemäß dem Beispiel 1 des Verfahrens der deutschen Patentanmeldung P 36 06 745 (= DE-OS .. .. ...) abgebauter Natur-Kautschuklatex.

L 3: Nitrilkautschuklatex mit einem Acrylnitrilgehalt von 23 % und einem Feststoffgehalt von 20 %.

A.2. Kieselsäurefüllstoffe (FKS)

(Wenn nicht anders angegeben, wird ein weitgehend salzfrei gewaschener Filterkuchen aus der Kieselsäurefällung eingesetzt.)

| | BET (m²/g | Korngrößenverteilung (μm)[1] | | | | | Filterkuchenfeuchte[2] (%) |
|---|---|---|---|---|---|---|---|
| | | $d_{min}$ | $d_{10}$ | $d_{50}$ | $d_{90}$ | $d_{max}$ | |
| FKS 1 | 103 | 2,6 | 6,3 | 12,7 | 22,6 | 38,0 | 77 |
| FKS 2 | 114 | 1,7 | 4,8 | 8,9 | 16,0 | 27,0 | 77 |
| FKS 3 | 156 | 2,6 | 5,7 | 12,4 | 20,1 | 38,0 | 81 |
| FKS 4 | 177 | 3,7 | 9,7 | 38,7 | 135,0 | 150,0 | 81 |
| FKS 5 | 178 | 3,7 | 4,4 | 8,6 | 14,7 | 21,1 | 83 |
| FKS 6 | 205 | 2,6 | 7,2 | 19,7 | 35,1 | 75,0 | 80 |
| FKS 7 | 236 | 1,7 | 5,6 | 11,9 | 20,5 | 38,0 | 85 |

[1] Die Korngrößenverteilung wurde nach der Microtrac-/Submicrotrac-Methode (Powder Technology 14, 287 - 293 (1976) bestimmt. Dabei bedeuten $d_{min}$ und $d_{max}$ den kleinsten bzw. größten vorkommenden Partikeldurchmesser und die Werte $d_{10}$, $d_{50}$ und $d_{90}$, daß 10, 50 bzw. 90 % des Gesamtvolumens aus Partikeln bestehen, die kleiner oder gleich sind als die jeweils angegebenen Werte.

[2] Die Filterkuchenfeuchte wird bestimmt aus der Gewichtsdifferenz von 100 g Filterkuchen vor und nach dem zweistündigen Trocknen bei 105 °C.

A.3. Grenzflächenaktive Substanzen (GFS)

GFS 1: 20 %ige wäßrige Lösung eines Fettalkoholpolyglykolethers (MARLIPAL SU der Hüls AG)

GFS 2: Polyamin (SUPERFLOC C 567, Fa. American Cyanamid), eingesetzt als 1 %ige wäßrige Lösung

GFS 3: Hochmolekulares Polyamin (ROHAGIT KF 720, Fa. Röhm GmbH), eingesetzt als 0,1 %ige wäßrige Lösung

GFS 4: Hochmolekulares Polyamin (ROHAGIT KL 210, Fa. Röhm GmbH), eingesetzt als 1 %ige wäßrige Lösung

GFS 5: 1 %ige wäßrige Lösung von Cetyltrimethylammoniumbromid

A.4. Kolloidale Kieselsäuren (KK)

| | pH-Wert | $SiO_2$-Konzentration (%) | Partikeldurchmesser (nm) |
|---|---|---|---|
| KK 1 | 10 | 30 | 25 - 30 |
| KK 2 | 9 - 10 | 40 | 15 |
| KK 3 | 9 - 10 | 30 | 7 - 8 |
| KK 4 | 8 - 9 | 6 | 4 |

B. Prüfungsverfahren

Jenike-Test zur Rieselfähigkeit:

Der in $N/m^2$ angegebene Meßwert resultiert aus einem Schertest zur Bestimmung der Druckfestigkeit von Schüttgütern nach Jenike und Johannson im sogenannten Flow Factor Tester (Auswertung vgl. H. P. Kurz, Verfahrenstechnik 10, Seiten 68 bis 72, (1976). Der Test wurde unmittelbar nach dem Füllen der Apparatur bei 20 °C unter den angegebenen Verdichtungsspannungen durchgeführt. In dem Bereich der gewählten Verdichtungsspannungen gelten die Pulver bei Werten unterhalb 1 000 $N/m^2$ als gut riesel-und silierfähig. Im Bereich von 1 000 bis 2 000 $N/m^2$ sind die Pulver in ihrer Rieselfähigkeit befriedigend und im Silo mit Austragshilfen noch handhabbar. Bei Werten oberhalb 2 000 $N/m^2$ gelten die Pulver als kohäsiv, d. h. Riesel-und Silierfähigkeit sind unbefriedigend.

Beispiel 1

In einem 5-l-Becherglas wurden bei Raumtemperatur 1 628 g des Kautschuklatex L 1 vorgelegt und mit 8,3 Umdrehungen pro Sekunde ($sec^{-1}$) gerührt. Als Rührer wurde ein 3-Blatt-Impellerrührer mit dem Durchmesser d = 6 cm verwendet. In diese Vorlage wurden in genannter Reihenfolge gegeben: 73 g der Lösung GFS 1, 8 g der Lösung KK 2 und 1 030 g FKS 5. Nach erfolgter Zugabe wurde die Drehzahl des Rührers auf 28,5 $sec^{-1}$ erhöht. 4 Minuten später wurde durch Zugabe von 50 %iger $H_2SO_4$ ein pH-Wert der Mischung von 2,5 bis 1,5 eingestellt. Der pH-Wert wurde mit Hilfe eines pH-Meters der Fa. Metrohm, Typ E 520, bestimmt. Die Mischung wurde nach der Zugabe der Säure noch weitere 5 Minuten bei gleicher Drehzahl gerührt. Sodann wurde auf einer Nutsche der Feststoffanteil vom Serum abgetrennt und dreimal mit je 2 l Wasser gewaschen. Der Filterkuchen wurde anschließend grob zerteilt und auf einem handelsüblichen Wirbelschichttrockner mit Rührzone 1 Stunde bei 45 °C vorgetrocknet. Die Endtrocknung erfolgte unter Vakuum (Wasserstrahlpumpe) im Trockenschrank (24 Stunden bei 50 °C). Es wurde ein gut rieselfähiges Kautschukpulver mit einem Jenike-Wert von 540 (Verdichtungsspannung 2 700 $N/m^2$) erhalten.

Vergleichsbeispiel A

Beispiel 1 wurde mit dem Unterschied wiederholt, daß auf die Zugabe von KK 2 verzichtet wurde. Es entstand eine inhomogene Kautschuk-Kieselsäure-Mischung mit einem unerwünscht hohen Anteil an freier, d. h. nicht eingebauter Kieselsäure. Eine Aufarbeitung zu Kautschukpulver war nicht möglich.

Beispiele 2 bis 11

Die Versuche wurden unter den in der Tabelle 1 angegebenen Bedingungen in der im Beispiel 1 beschriebenen Weise durchgeführt. Die Jenike-Werte der erhaltenen Kautschukpulver sind ebenfalls in der Tabelle 1 angegeben.

Tabelle 1

| Bsp. Nr. | Latex Art | Latex Menge (g) | Füllstoff Art | Füllstoff Menge (g) | grenzflächen-akt. Substanz Art | grenzflächen-akt. Substanz Menge (g) | kolloid. Kieselsäure Art | kolloid. Kieselsäure Menge (g) | pH-Wert | Verdichtungs-spannung (N/m²) | Jenike-Wert (N/m²) |
|---|---|---|---|---|---|---|---|---|---|---|---|
| 2 | L 1 | 1 628 | FKS 6 | 1 750 | GFS 1 | 54 | KK 2 | 8,8 | 2,5-1,5 | 2 800 | 895 |
| 3 | L 1 | 1 628 | FKS 7 | 1 160 | GFS 1 | 54 | KK 1 | 35 | 2,5-1,5 | 2 500 | 780 |
| 4 | L 1 | 1 628 | FKS 1 | 760 | GFS 1 | 54 | KK 2 | 26,2 | 2,5-1,5 | 2 510 | 780 |
| 5 | L 1 | 1 628 | FKS 2 | 760 | GFS 1 | 54 | KK 2 | 26,2 | 2,5-1,5 | 2 560 | 650 |
| 6 | L 1 | 1 628 | FKS 3 | 921 | GFS 1 | 54 | KK 2 | 26,2 | 2,5-1,5 | 2 710 | 630 |
| 7 | L 1 | 1 628 | FKS 4 | 921 | GFS 1 | 54 | KK 2 | 26,2 | 2,5-1,5 | 2 700 | 530 |
| 8 | L 1 | 1 628 | FKS 5 | 1 020 | GFS 1 | 54 | KK 2 | 26,2 | 2,5-1,5 | 3 100 | 795 |
| 9 | L 1 | 1 395 | FKS 1 | 625 | GFS 2 | 900 | KK 1 | 33 | 3 -2 | 2 000 | 710 |
| 10 | L 3 | 1 500 | FKS 3 | 781 | GFS 4 | 900 | KK 3 | 10 | 3 -2 | 2 000 | 580 |
| 11 | L 2 | 1 500 | FKS 6 | 705 | GFS 5 | 900 | KK 3 | 30 | 7 -6 | 2 000 | 1 095 |

Beispiel 12

In der im Beispiel 1 beschriebenen Apparatur wurden 408 g einer Suspension von FKS 7 mit einem Feststoffgehalt von 12 % vorgelegt und mit 11 $sec^{-1}$ gerührt. Dann wurden 16,5 g KK 4 und zunächst 100 g GFS 3 zugegeben und die Mischung eine Minute lang gerührt. Dann wurden 500 g von L 2 zugegeben und 2 Minuten gerührt. Anschließend wurden innerhalb von 30 Sekunden 1 500 g GFS 3 eingemischt. Es stellte sich ein pH-Wert von 8 bis 7 ein.

Die Aufarbeitung erfolgte wie im Beispiel 1 beschrieben. Bei einer Verdichtungsspannung von 2 000 $N/m^2$ wurde ein Jenike-Wert von 970 $N/m^2$ bestimmt.

Beispiel 13

Beispiel 1 wurde mit dem Unterschied wiederholt, daß als Füllstoff eine nach dem Trocknen resuspendierte Kieselsäure FKS 6 in 15 %iger Suspension eingesetzt wurde. Bei einer Verdichtungsspannung von 2 000 $N/m^2$ wurde ein Jenike-Wert von 830 $N/m^2$ bestimmt.

Beispiel 14 und Vergleichsbeispiel B (Anwendungsbeispiele)

Die kautschuktechnologischen Eigenschaften der füllstoffhaltigen Kautschukpulver sollen anhand eines Beispiels exemplarisch dargestellt werden. Auf einem Walzwerk (Heiztemperatur 50 °C) wurden 900 g Pulverkautschuk und als Vergleichsbeispiel B 600 g Ballenkautschuk mit 300 g Kieselsäure nach folgender Testrezeptur verarbeitet:

| | Gew.-Teile | Gew.-Teile |
|---|---|---|
| Pulverkautschuk nach Beispiel 3 | 150 | |
| E-SBR mit 23,5 % Styrol | | 100 |
| Fällungskieselsäure FKS 7 | | 50 |
| (getrocknet und mit einer Stiftmühle vermahlen) | | |
| Zinkoxid | 5 | 5 |
| Stearinsäure | 2 | 2 |
| 2,6-Di-tert.-butyl-p-Kresol | 1 | 1 |
| Diethylenglykol | 2,5 | 2,5 |

| | Gew.-Teile | Gew.-Teile |
|---|---|---|
| naphthenisches Weichmacher-Öl | 5,0 | 5,0 |
| 2.2'-Dibenzothiazyl-disulfid | 1 | 1 |
| N,N'-Diphenylguanidin | 2 | 2 |

Vulkanisationsverhalten und mechanische Eigenschaften sind mit den Prüfmethoden in Tabelle 2 zusammengefaßt.

Tabelle 2

| Prüfmethode | | | Pulverkautschukmischung | Ballenmischung |
|---|---|---|---|---|
| Mooney-Viskosität 100 °C | | DIN 53 523 | 75 | 116 |
| Defo-Härte | | DIN 53 5145 | 1 900 | 2 850 |
| Vulkameter: $t_{10}$ | (min) | DIN 53 529 | 4,0 | 4,1 |
| $t_{90}$ | (min) | DIN 53 529 | 8,8 | 7,9 |
| Delta t | (min) | DIN 53 529 | 4,8 | 3,8 |
| Heizung 150 °C | (min) | | 12 | 12 |
| Zugfestigkeit, Normring I | (MPa) | DIN 53 504 | 15,4 | 14,6 |
| Bruchdehnung, Normring I | (%) | DIN 53 504 | 689 | 651 |
| Modul 100, Normring I | (MPa) | DIN 53 504 | 1,2 | 2,0 |
| Modul 300, Normring I | (MPa) | DIN 53 504 | 2,6 | 4,4 |
| Modul 500, Normring I | (MPa) | DIN 53 504 | 6,1 | 8,2 |
| Zugverformungsrest,Normring I | (%) | DIN 53 511 | 30 | 40 |
| Kerbzähigkeit, Normring II | (N/mm) | | 50 | 33 |
| Shore-Härte A 22 °C | | DIN 53 505 | 66 | 74 |
| Elastizität 22 °C | (%) | DIN 53 512 | 41 | 50 |

Die Gegenüberstellung zeigt, daß die erfindungsgemäßen Pulverkautschuke den Ballenmischungen sowohl in der Verarbeitbarkeit (Mooney-Viskosität, Defo-Härte) als auch in den mechanischen Werten (z. B. Zugfestigkeit, Zugverformungsrest, Kerbzähigkeit) überlegen sind.

**Ansprüche**

1.Verfahren zur Herstellung von rieselfähigen mit Kieselsäure gefüllten Kautschukpulvern durch Vereinigung eines Kautschuklatex mit Kieselsäure unter Rühren in Gegenwart von Hilfsstoffen, Einstellung eines bestimmten pH-Bereiches, Abtrennung und Trocknung des Feststoffanteils,
dadurch gekennzeichnet,
daß man als Hilfsstoffe organische grenzflächenaktive Substanzen zusammen mit kolloidaler Kieselsäure einsetzt.

2. Verfahren nach Anspruch 1,
dadurch gekennzeichnet,
daß man als Füllstoff durch Ansäuern von Wasserglas gewonnene Fällungskieselsäure in weitgehend salzfrei gewaschener und niemals getrockneter Form einsetzt.

3. Verfahren nach den Ansprüchen 1 und 2,
dadurch gekennzeichnet,
daß man Kautschukpulver mit 30 bis 120 phr Kieselsäure herstellt.

4. Verfahren nach Anspruch 3,
dadurch gekennzeichnet,
daß man Kautschukpulver mit 40 bis 60 phr Kieselsäure herstellt.

5. Verfahren nach den Ansprüchen 1 bis 4,
dadurch gekennzeichnet,
daß man kationische organische grenzflächenaktive Substanzen einsetzt.

6. Verfahren nach den Ansprüchen 1 bis 4,
dadurch gekennzeichnet,
daß man nicht-ionische organische grenzflächenaktive Substanzen einsetzt.

7. Verfahren nach den Ansprüchen1 bis 6,
dadurch gekennzeichnet,
daß man die grenzflächenaktiven Substanzen in einer Menge von 0,3 bis 10 phr einsetzt.

8. Verfahren nach Anspruch 7,
dadurch gekennzeichnet,
daß man die grenzflächenaktiven Substanzen in einer Menge von 0,5 bis 4 phr einsetzt.

9. Verfahren nach den Ansprüchen 1 bis 8,
dadurch gekennzeichnet,
daß man die kolloidale Kieselsäure in einer Menge von 0,5 bis 6 phr einsetzt.

10. Verfahren nach Anspruch 9,
dadurch gekennzeichnet,
daß man die kolloidale Kieselsäure in einer Menge von 1 bis 3 phr einsetzt.

11. Verwendung der nach den Ansprüchen 1 bis 9 erhaltenen Kautschukpulver zur Herstellung von Vulkanisaten.

Europäisches Patentamt

# EUROPÄISCHER RECHERCHENBERICHT

Nummer der Anmeldung

EP 87 10 8958

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 532 320 (POLYSAR)<br>* Anspruch 1 *<br>--- | | C 08 J 3/20<br>C 08 K 3/36<br>C 08 L 21/00 |
| A | GB-A-1 030 616 (HÜLS)<br>* Anspruch 1 *<br>----- | | |
| | | | **RECHERCHIERTE SACHGEBIETE (Int. Cl.4)** |
| | | | C 08 J<br>C 08 K<br>C 08 L |

Der vorliegende Recherchenbericht wurde für alle Patentansprüche erstellt

| Recherchenort | Abschlußdatum der Recherche | Prüfer |
|---|---|---|
| DEN HAAG | 19-11-1987 | VAN HUMBEECK F.W.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)